# EUROPEAN PATENT SPECIFICATION

(11) **EP 2 048 041 B1**
(45) Date of publication and mention of the grant of the patent: **02.03.2011**
(21) Application number: 07381069.9
(22) Date of filing: 09.10.2007
(51) Int. Cl.: B60R 21/239

(54) **Front airbag with an adaptive venting device**
Frontairbag mit adaptiver Entlüftungsvorrichtung
Airbag frontal avec un dispositif de ventilation adaptative

(43) Date of publication of application: 15.04.2009
(73) Proprietor: Dalphi Metal España, S.A., 28006 Madrid (ES)
(72) Inventor: Duarte de Arez, Luis José, Boecillo 47151 Valladolid (ES); Ramos, Ramón, Boecillo 47151 Valladolid (ES); Denys, Isabelle, Boecillo 47151 Valladolid (ES); Core Almarza, Emiliano, Boecillo 47151 Valladolid (ES)
(74) Representative: Mehnert, Bernhard

(56) References cited:
- EP-A- 1 834 848
- WO-A-2007/003418
- DE-B3-102004 014 681
- DE-U1-202007 005 342

## Description

### Field of the Invention

The present invention relates to a venting device of a front airbag used in automobiles to dampen impacts experienced by its occupants in the event of impacts or collisions, and more particularly to a venting device that can be adapted to different positions and sizes of the occupant.

### Background of the Invention

An airbag module basically consists of a folded cushion that is quickly inflated by means of a gas produced by a generator when certain sensor devices detect a collision of the vehicle. The cushion is thus deployed between the vehicle's occupant and an area of the vehicle, protecting him/her during the collision.

In normal cushion deployment operation, the internal pressure produced by the generator when the cushion is filled with gas may be high enough to cause the cushion to be so hard that the occupant bounces off it. To prevent this drawback, they have been provided with a venting opening serving to reduce internal pressure of the cushion and, accordingly, the possibility of causing damage when they are activated.

The use of several means of plugging this venting opening to achieve better control of the internal pressure in the cushion than that provided by only the variation of the size of the opening is in turn known. In this sense, the use of patches for achieving that the gas does not exit through the discharge opening immediately but rather when the patch breaks as a given pressure inside the cushion has been reached, must be emphasized. The art has proposed different types of patches with different means for controlling the breaking thereof, more or less according to a certain resistance to the gas pressure inside the cushion. The presence of the gas pressure required for the cushion to carry out its protective function is thus made compatible with the assurance that the gas pressure will not reach an excessive value, with the risk for the people for whom the cushion is deployed.

Additionally, venting devices that allow increasing the gas outlet flow according to the specific characteristics of each collision and the type of passenger involved have also become necessary, and to that effect several venting device solutions providing surface adjustable venting openings facilitating the increase of the venting area as the internal pressure in the cushion increases are also known.

A newly arisen need involves the need for airbags that allow reducing the venting area, even completely eliminating it, in certain impact conditions, which requires closing mechanisms that must function in the sense opposite to those indicated. The traditional previously mentioned patches had to completely plug the outlet opening until the internal gas pressure inside the cushion reached a given level and then they broke, no longer functioning; now the opposite is required: devices that allow closing the venting opening in certain situations. Some proposals to that effect are known, such as the following.

Spanish patent ES 2,182,629, US patent 6,139,048, US patent application 2004/0090054, patent application WO 2006/024472 and US patent application 2006/0151979 describe devices using moving elements to close the venting opening using the stress produced in the cushion due to the pressure difference together with the difference of how the occupant strikes the airbag.

Patent applications EP 1,640,221 and WO 2007/003418 as well as DE 20 2007 005 342 U1 describe passive venting control mechanisms using elements which close the venting opening when certain conditions arise.

The present invention proposes a front airbag with a venting device adaptable to different positions and sizes of the occupant of the vehicle with functionalities different from those of the mentioned art.

### Summary of the Invention

An object of the present invention is to provide an airbag module for an automotive vehicle that can adapt to different positions and sizes of the occupant and to different types of impacts.

Another object of the present invention is to provide an airbag module for an automotive vehicle having a self-adaptive performance according to the position, size of the occupant and type of impact, without the need for any mechanism for detecting the same.

Another object of the present invention is to provide an airbag module for an automotive vehicle that allows absorbing the tolerances of other passive safety systems that may involve changes in the expected position of the occupant. Single-shell structures with programmed deformation, seats, seatbelts and collapsible steering columns which may cause changes in the position of the occupant within a certain setting range must be mentioned.

These and other objectives are achieved by means of a front airbag module for an automotive vehicle comprising the features of claim 1. Such an inflatable cushion can be inflated with the gas produced by a generator when a collision occurs, including at least one venting opening and a regulation device to regulate the venting through said opening formed by a flexible material part joined to the inflatable cushion on the periphery or near zones of said venting opening such that it can completely or partially close or uncover it, preventing or allowing the output of gas, and a stress member joined at one of its ends to said flexible material part and at the other end to the inflatable cushion, wherein the geometric configurations of said stress member and of said flexible material part are established such that the opening degree of the venting opening is determined by the stress level of the stress member during cushion deployment. The venting opening would be closed when the stress member is not stressed and gradually opens as the stress in the stress member increases.

According to the invention the venting device comprises several venting openings. A front airbag module is thereby obtained with an additional variable to establish its capabilities of adaptability to the position and size of the occupant.

In an embodiment of the invention, the cushion of the airbag module is configured to protect two occupants and comprises two venting devices. A front airbag module for protecting two occupants of a vehicle is thereby obtained with a capability of adaptability to the position and size of each of them.

The main advantage of the present invention is that a front airbag module is obtained which performs in a self-adapting manner, adjusting the pressure of the cushion to the position, size of the occupant and severity of the impact.

Another advantage of the present invention is that the OOP (Out of Position) performance of the airbag module is improved in that the venting device contributes to absorbing the energy of the cushion deployment, reducing injuries to the occupant.

Another advantage of the present invention is that the stress member incorporated in the cushion allows improving the steering and guidance of its deployment.

Another advantage of the present invention is that the stress member incorporated in the cushion allows optimizing the contact surface with the occupant.

Other features and advantages of the present invention will become evident from the following detailed description of several illustrative and by no means limiting embodiments of its object in relation to the attached drawings.

### Description of the Drawings

Figure 1 shows a schematic cross-sectional view of an airbag module with a venting regulation device in two states of its deployment, in one of which the stress member is stressed and in the other one (shown with a dotted line) it is not stressed.
Figure 2 shows a schematic cross-sectional view of an airbag module with a venting regulation device in two states of its deployment, in one of which the stress member is stressed and in the other one (shown with a dotted line) it is not stressed.
Figures 3 and 4 schematically show two embodiments of the device which allow the flexible material part to completely close the venting opening in the initial cushion deployment phase.
Figures 5a and 5b schematically show an embodiment of an airbag module with a venting regulation device according to the present invention with two venting openings in, respectively, two states of its deployment, the stress member in the first one not being stressed and in the second one being stressed.

### Detailed Description of the Invention

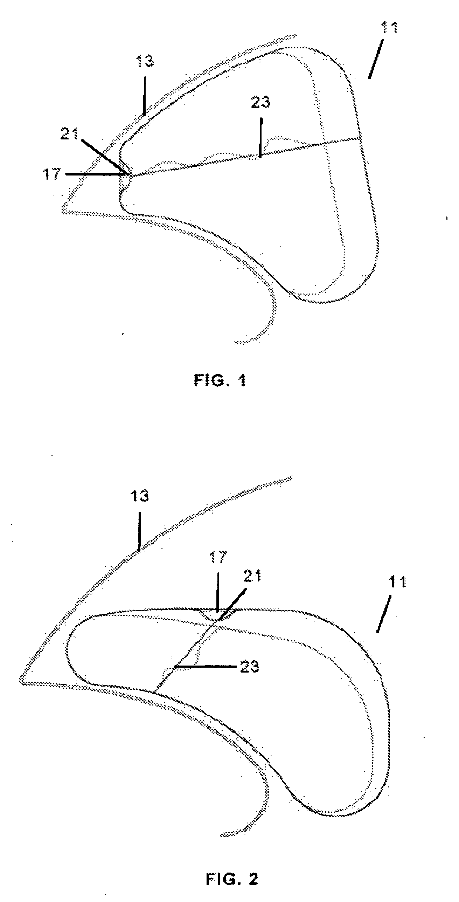

The front airbag shown in Figures 1 and 2 comprises an inflatable cushion 11 with a venting opening 17 and a venting regulation device formed by a flexible material part 21 joined to the cushion 11 such that it can partially or completely close or uncover it, and a stress member 23 joined at one end to said flexible part 21 and at the other end to the inflatable cushion 11. The inflatable cushion 11 is configured so as to be deployed between a passenger (not shown) and the front part 13 of the vehicle body.

The flexible material part 21 is completely or partially joined to the inflatable cushion 11 along its perimeter by means of suitable joining means such as seams for example, without the part being stressed, but rather leaving a clearance between it and the cushion. The venting opening 17 is located inside the perimeter of the flexible material part 21.

The stress member 23, which is usually in band shape, is joined at one part to the flexible material part 21 by means of suitable joining means such as seams 35, and at another part to the inflatable cushion 11 by means of suitable means such as seams.

With this venting device a multi-self-adaptable performance of the cushion is obtained according to the real position of the occupant and his/her size.

At the beginning of cushion deployment, the venting opening 17 is closed by the flexible material part 21. As cushion deployment gradually progresses, as can be seen in the two deployment states shown in the figures, one using a dotted line and the other one a solid line, the stress member 23 gradually stresses and when pulling on the flexible material part 21, it completely or partially uncovers the venting opening 17, depending on the stress degree. Depending on how the occupants strike the cushion 11, and even the position in which he/she strikes it, the stress member 23 loses stress and therefore completely or partially closes the venting opening 17. This means that for smaller sized or lower impact energy occupants the stress member 23 does not lose stress when it comes into contact with the occupant, the venting opening 18 thereby remaining open, reducing the hardness of the cushion. However, for larger sized or larger impact energy occupants, the stress member 23 would lose stress, causing the venting opening 17 to be sealed, thereby maintaining the pressure in the cushion for more time, optimizing the retention of the occupant.

Therefore by means of the mentioned venting device gas losses occurring at the beginning of cushion deployment are reduced, maximizing performance of the module, and the venting is controlled to reduce or eliminate hard contacts. In the initial and final deployment phases, venting is blocked and in the intermediate phase venting adjusted to the occupant position-size configuration is allowed.

These features of the airbag module of the present invention differ from solutions in the prior art in which the venting opening opens in the initial cushion deployment phase. Another significant difference is the flexibility of the venting device of the present invention that is not fixed to any stiff element as occurs in some of the solutions in the state of the art.

In the airbag shown in Figure 1, the stress member is positioned such that it is stressed in a direction that is considerably perpendicular to the contact surface of the cushion 11 with the occupant, whereas in the embodiment shown in Figure 2, the stress member 23 is positioned in a direction that is oblique to the contact surface of the cushion 11 with the occupant. In both cases the venting opening 17 is located in an area of the cushion 11 that is not blocked by the occupant or by the vehicle during cushion deployment.

Otherwise, in the case of cushions 11 made with a main front panel intended to come into contact with the occupant and a main rear panel joined along their perimetral edges, the stress member 23 would be joined to the main front panel.

The suitable operation of the venting regulation device may require the use of further means in addition to those means for joining the flexible material part 21 to the inflatable cushion 11.

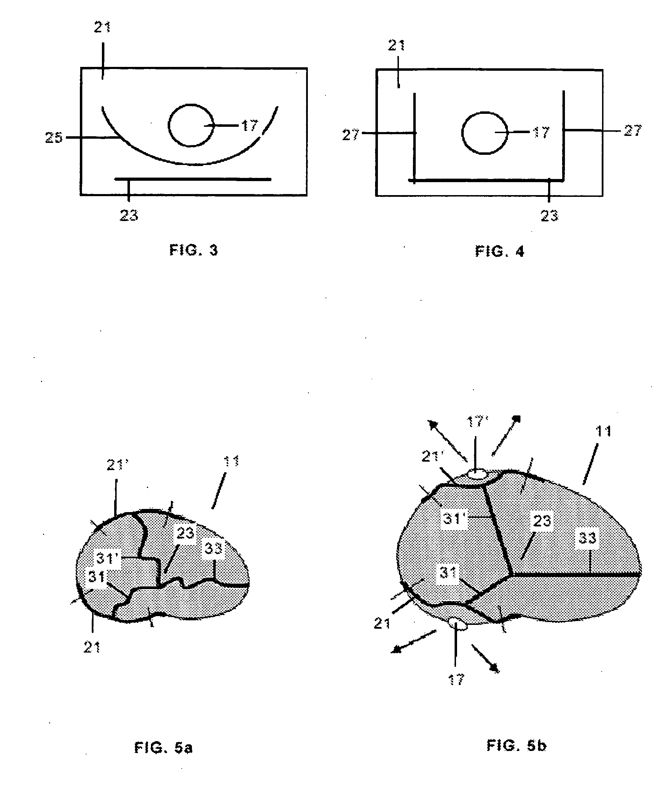

An additional suitable means shown in Figure 3 consists of an additional seam 25 of the flexible material part 21 to the inflatable cushion which can be broken when the stress member 23 applies certain stress on the flexible material part 21.

Another additional suitable means particularly when the flexible material part 21 is joined to the inflatable cushion 11 along its entire perimeter preventing any gas leak consists of, according to Figure 4, pre-cuts 27 defining breaking lines when the stress member 23 applies a certain stress on the flexible material part 21.

In the embodiment of the invention shown in Figures 5a and 5b there are two venting openings 17, 17', and the venting device comprises two flexible parts 21, 21' joined to the cushion 11 on the periphery or near zones of said venting openings 17, 17' which, joined to the stress member 23 which in this case comprises a trunk section 33 joined to the cushion 11 and two arms 31, 31' joined to said flexible parts 21, 21'. The present invention also comprises similar embodiments for a plurality of venting openings and particularly for a number comprised between 3 and 7.

According to the invention a front airbag module intended for protecting more than one passenger, as occurs in the case of industrial vehicles with a three-seat row for a driver and two passengers, would comprise two venting devices according to the invention located in the areas of the cushion facing towards each of said passengers such that it can perform adaptively and differently in relation to each of the passengers.

While several embodiments of the invention have been described and shown, modifications comprised within the scope thereof can be introduced, the scope not being intended to be limited to said embodiment but to the content of the following claims.

## Claims

1. A front airbag module for an automotive vehicle comprising an inflatable cushion (11) that can be inflated with the gas produced by a generator when a collision occurs, including at least one venting opening (17) and a regulation device to regulate venting through said venting opening (17) formed by a flexible material part (21) joined to the inflatable cushion (11) on the periphery of said venting opening (17) such that it can completely or partially close or uncover it, preventing or allowing the output of gas, and a stress member (23) joined at one of its ends to said flexible material part (21) and at the other end to the inflatable cushion (11), wherein the geometric configurations of said stress member (23) and of said flexible material part (21) are established such that the opening degree of the venting opening (17) is determined by the stress level in the stress member (23) during cushion (11) deployment, **characterized in that** the cushion (11) is configured for protecting several occupants of the vehicle wherein a plurality of said venting openings (17) is provided and wherein a venting opening is located in each part of the cushion which faces an occupant.

2. A front airbag module for an automotive vehicle according to claim 1, **characterized in that** the flexible material part (21) is initially joined to the inflatable cushion (11) such that it completely closes the venting opening (17), and **in that** it includes means (25, 27) allowing the formation therein of a breaking line when stress is applied thereon by means of the stress member (23).

3. A front airbag module for an automotive vehicle according to any of claims 1 to 2, **characterized in that** the inflatable cushion (11) comprises a main front panel intended to come into contact with the occupant and a rear panel, joined along their perimetral edges, and **in that** the stress member (23) is joined to the main front panel.

4. A front airbag module for an automotive vehicle according to any of claims 1 to 3, **characterized in that** the regulation device to regulate venting through said openings is formed by flexible material parts (21) joined to the inflatable cushion (11) on the periphery of said venting openings (17, 17').

5. A front airbag module for an automotive vehicle according to any of claims 1 to 4, **characterized in that** a stress member (23) formed by a plurality of arms (31, 31') joined at one of their ends to said flexible material parts (21, 21') and at the other end to a trunk section (33) joined at the opposite end to the cushion (11).

6. A front airbag module for an automotive vehicle according to claim 4 or 5, **characterized in that** the number of venting openings is comprised between 2 and 7.

## Patentansprüche

1. Frontairbag-Modul für ein Kraftfahrzeug mit einem aufblasbaren Kissen (11), das bei Auftreten eines Zusammenstosses mit dem von einem Generator produzierten Gas aufgeblasen werden kann, mit mindestens einer Belüftungsöffnung (17) und einer Reguliervorrichtung zum Regulieren der Belüftung durch die Belüftungsöffnung (17), welche aus einem flexiblen Materialteil (21) gebildet ist, das am Umfang der Belüftungsöffnung (17) derart mit dem aufblasbaren Kissen (11) verbunden ist, dass es diese vollständig oder teilweise verschließen oder freilegen kann und somit den Gasausstoß verhindert oder ermöglicht, und mit einem Belastungsteil (23), welches an einem Ende mit dem flexiblen Materialteil (21) und an dem anderen Ende mit dem aufblasbaren Kissen (11) verbunden ist, wobei die geometrischen Ausgestaltungen des Belastungsteils (23) sowie des flexiblen Materialteils (21) derart ausgelegt sind, dass der Öffnungsgrad der Belüftungsöffnung (17) durch die Belastungshöhe in dem Belastungsteil (23) während der Entfaltung des Kissens (11) bestimmt wird, **dadurch gekennzeichnet, dass** das Kissen (11) zum Schutz mehrerer Fahrzeuginsassen ausgelegt ist, wobei mehrere dieser Belüftungsöffnungen (17) vorgesehen sind und wobei in jedem, einem Insassen gegenüberliegenden Teil des Kissens eine Belüftungsöffnung angeordnet ist.

2. Frontairbag-Modul für ein Kraftfahrzeug gemäß Anspruch 1, **dadurch gekennzeichnet, dass** das flexible Materialteil (21) zunächst mit dem aufblasbaren Kissen (11) derart verbunden ist, dass es die Belüftungsöffnung (17) komplett verschließt, und dass es Einrichtungen (25, 27) aufweist, die darin die Ausbildung einer Bruchlinie ermöglichen, wenn mittels des Stressteils (23) eine Belastung auf diese ausgeübt wird.

3. Frontairbag-Modul für ein Kraftfahrzeug gemäß einem der Ansprüche 1 bis 2, **dadurch gekennzeichnet, dass** das aufblasbare Kissen (11) eine Hauptfrontplatte, die mit dem Insassen in Berührung kommen soll, und eine entlang ihrer umlaufenden Kanten angefügte, hintere Platte umfasst, und dass das Belastungsteil (23) mit der Hauptfrontplatte verbunden ist.

4. Frontairbag-Modul für ein Kraftfahrzeug gemäß einem der Ansprüche 1 bis 3, **dadurch gekennzeichnet, dass** die Reguliervorrichtung zum Regulieren der Belüftung durch die Öffnungen von flexiblen Materialteilen (21) gebildet wird, welche am Umfang der Belüftungsöffnungen (17, 17') mit dem aufblasbaren Kissen (11) verbunden sind.

5. Frontairbag-Modul für ein Kraftfahrzeug gemäß einem der Ansprüche 1 bis 4, **dadurch gekennzeichnet, dass** ein Belastungsteil (23) aus mehreren Armen (31, 31') gebildet ist, die an einem ihrer Enden mit den flexiblen Materialteilen (21, 21') und an dem anderen Ende mit einem an dem gegenüberliegenden Ende mit dem Kissen (11) verbundenen Kofferabschnitt (33) verbunden ist.

6. Frontairbag-Modul für ein Kraftfahrzeug gemäß Anspruch 4 oder 5, **dadurch gekennzeichnet, dass** die Anzahl an Belüftungsöffnungen zwischen 2 und 7 beträgt.

## Revendications

1. Un module airbag frontal pour véhicule automobile comprenant un sac gonflable (11) qui peut être gonflé par le gaz produit par un générateur lorsqu'une collision survient, incluant au moins une ouverture d'évent (17) et un système de régulation pour réguler la ventilation au travers de ladite ouverture d'évent (17) formé par une pièce faite d'un matériau flexible (21) reliée au sac gonflable (11) à la périphérie de ladite ouverture d'évent (17) de sorte qu'elle peut la fermer complètement ou partiellement ou la découvrir, empêchant ou permettant la sortie des gaz, et un élément de tension (23) relié à l'une de ses extrémités à la dite pièce faite d'un matériau flexible (21) et à son autre extrémité au sac gonflable (11) , où les configurations géométriques du dit élément de tension (23) et de la dite pièce faite d'un matériau flexible (21) sont définies de sorte que l'angle d'ouverture de l'ouverture d'évent (17) est déterminé par le niveau de contrainte dans ledit élément de tension (23) lors du déploiement du sac (11), **caractérisé en ce que** le sac (11) est configuré pour protéger plusieurs occupants d'un véhicule où une pluralité des dites ouvertures d'évent (17) est présente et où une ouverture d'évent est située dans chaque partie du sac faisant face à un occupant.

2. Un module airbag frontal pour véhicule automobile selon la revendication 1, **caractérisé en ce que** la pièce faite d'un matériau flexible (21) est initialement reliée au sac gonflable (11) de sorte qu'elle ferme complètement l'ouverture d'évent (17), et **en ce qu'**elle inclut des moyens (25, 27) permettant la formation d'une ligne de rupture lorsqu'une contrainte est appliquée dessus au moyen d'un élément de tension (23).

3. Un module airbag frontal pour véhicule automobile selon l'une quelconque des revendications 1 à 2, **caractérisé en ce que** le sac gonflable (11) comprend un panneau avant principal prévu pour venir en contact avec l'occupant et un panneau arrière, relié le long de leurs arêtes périmétriques, et **en ce que** l'élément de tension (23) est relié au panneau avant principal.

4. Un module airbag frontal pour véhicule automobile selon l'une quelconque des revendications 1 à 3, **caractérisé en ce que** le système de régulation régulant la ventilation au travers des dites ouvertures est formé de pièces faites de matériau flexible (21) reliées au sac gonflable (11) à la périphérie des dites ouvertures d'évent (17, 17').

5. Un module airbag frontal pour véhicule automobile selon l'une quelconque des revendications 1 à 4, **caractérisé en ce que** l'élément de tension ( 23) est formé par une pluralité de bras (31, 31') reliés à l'une de leurs extrémités aux pièces faites de matériau flexible (21, 21') et à l'autre extrémité à une section tronc (33) reliée au sac (11) à son extrémité opposée.

6. Un module airbag frontal pour véhicule automobile selon les revendications 4 ou 5, **caractérisé en ce que** le nombre d'ouvertures d'évent est compris entre 2 et 7.
